(19) Europäisches Patentamt
European Patent Office
Office européen des brevets

(11) **EP 2 179 166 B1**

(12) **FASCICULE DE BREVET EUROPEEN**

(45) Date de publication et mention
de la délivrance du brevet:
**10.08.2016 Bulletin 2016/32**

(21) Numéro de dépôt: **08828973.1**

(22) Date de dépôt: **16.07.2008**

(51) Int Cl.:
***F02K 1/76*** *(2006.01)*     ***F02K 1/72*** *(2006.01)*

(86) Numéro de dépôt international:
**PCT/FR2008/001047**

(87) Numéro de publication internationale:
**WO 2009/030837 (12.03.2009 Gazette 2009/11)**

(54) **PROCEDE DE COMMANDE D'AU MOINS UN ACTIONNEUR DE CAPOTS D'UN INVERSEUR DE POUSSEE POUR TURBOREACTEUR**

VERFAHREN ZUR STEUERUNG MINDESTENS EINES AKTUATORS ODER ZUR AKTIVIERUNG DER COWLINGS EINES TURBOSTRAHLMOTOR-SCHUBUMKEHRERS

METHOD FOR CONTROLLING AT LEAST ONE ACTUATOR OR ACTUATING THE COWLINGS OF A THRUST INVERTER IN A TURBOJET ENGINE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.08.2007  FR 0705923**

(43) Date de publication de la demande:
**28.04.2010  Bulletin 2010/17**

(73) Titulaire: **Aircelle**
**76700 Gonfreville l'Orcher (FR)**

(72) Inventeur: **MAALIOUNE, Hakim**
**F-78630 Orgeval (FR)**

(74) Mandataire: **Verriest, Philippe et al**
**Cabinet Germain & Maureau**
**12, rue Boileau**
**69006 Lyon (FR)**

(56) Documents cités:
**WO-A-03/010430     WO-A-2006/134253**
**US-A- 4 827 248     US-A1- 2002 157 376**

**Description**

La présente invention se rapporte à un procédé de commande d'au moins un actionneur de capots d'un inverseur de poussée pour turboréacteur.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. De tels systèmes requièrent une maintenance importante car la moindre fuite dans le réseau hydraulique ou pneumatique peut être difficilement détectable et risque d'avoir des conséquences dommageables tant sur l'inverse que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans le document EP 0 843 089.

En utilisant de tels actionneurs, il est possible de réaliser un asservissement des mouvements de déploiement et de fermeture d'un capot d'inverseur en fonction de la position du capot sur sa course entre sa position ouverte et sa position fermée.

Il est connu à cet effet d'utiliser des capteurs de position absolue disposés sur les capots et/ou les actionneurs mais également des capteurs de vitesse montés sur l'axe du moteur électrique de l'actionneur comme c'est le cas dans le document WO 2006/134253.

Dans de telles conditions, en cas de panne de ces capteurs, la commande du mouvement du capot ne peut plus être effectuée.

Il est également connu, notamment du document WO 03/010430, que lorsqu'il advient une interruption lors de l'escamotage ou du déploiement par exemple en cas de coupure temporaire d'alimentation électrique suivie d'une reprise, le capot de l'inverseur de poussée revienne automatiquement dans sa position de référence correspondant à sa position d'escamotage. Il n'est donc pas possible de connaitre précisément la position du capot tant que celui-ci n'a pas atteint sa position d'escamotage.

La présente invention a pour objet de remédier à ces inconvénients en fournissant un procédé de commande limitant les cas d'indisponibilité de l'inverseur.

A cet effet, la présente invention a pour objet un procédé de commande d'au moins un actionneur de capots d'un inverseur de poussée pour turboréacteur, l'actionneur étant entraîné par un moteur électrique comprenant un capteur de position relatif fournissant des informations sur l'évolution de son déplacement, dans lequel la commande du moteur est asservie en fonction de la position instantanée du capot dans au moins une portion de sa course entre sa position d'ouverture et sa position de fermeture, la position instantanée du capot étant déterminée en fonction d'au moins une donnée absolue de position de référence et des données de position relatives par rapport à cette position de référence fournies par le capteur de position relative du moteur, et dans lequel, en cas de reprise de l'actionnement après une interruption, une nouvelle détermination de la position de référence est engagée.

Grâce aux dispositions selon l'invention, la position instantanée est calculée en fonction d'une succession d'information de position relative du capteur relatif du moteur. L'information de position de référence peut être déterminée de plusieurs façons distinctes, ce qui permet de diminuer la dépendance vis-à-vis des capteurs de position absolue et de permettre un fonctionnement amélioré après une interruption.

Avantageusement, la position de référence est déterminée comme une position extrême de la course du capot.

La détermination de la position extrême d'un capot peut être réalisée sans capteur de position absolue du capot, par exemple par un capteur de proximité.

Selon un mode de mise en oeuvre, la position de référence est déterminée en fonction d'au moins une donnée de position absolue du capot fournie par un capteur de position absolue du capot.

Avantageusement, la position de référence est calculée comme une moyenne d'au moins deux valeurs de position absolue fournies par des capteurs de position absolue du capot.

Selon un mode de mise en oeuvre, les valeurs de position fournies par au moins un capteur de position absolue des capots sont comparées à un intervalle de valeurs correspondant à la course du capot.

Selon un mode de mise en oeuvre, en cas d'échec de la détermination d'une valeur de position de référence, la commande du moteur est modifiée pour abaisser le couple et/ou la vitesse du moteur.

Ces dispositions rendent l'ouverture et la fermeture de l'inverseur plus lente, mais permettent son utilisation malgré la panne de capteur.

L'actionnement à basse vitesse évite d'endommager la structure en absence d'information de position.

Selon un mode de mise en oeuvre, la position d'arrêt est utilisée pour déterminer la position de référence lors de la reprise.

Avantageusement, un signal de position relative du moteur et la position d'arrêt sont utilisés pour déterminer la nouvelle position de référence.

De toute façon, l'invention sera bien comprise à l'aide de la description qui suit, en référence au dessin schématique annexé représentant, à titre d'exemple non limitatif, une forme d'exécution du système mettant en oeuvre un procédé selon l'invention.

La figure 1 est une vue schématique partielle en perspective d'une nacelle intégrant un inverseur de poussée à grille.

La figure 2 est une représentation schématique des capots mobiles et de leur système d'actionnement.

La figure 3 est une représentation schématique du système de commande des actionneurs des capots mobiles.

La figure 4 est un organigramme d'un procédé selon l'invention.

La figure 5 donne un exemple d'évolution de la vitesse d'un capot en fonction de sa position au cours d'une phase de déploiement.

Avant de décrire en détail un mode de réalisation de l'invention, il est important de préciser que le procédé et le système décrit ne sont pas limités à un type d'inverseur en particulier. Bien qu'illustrée par un inverseur à grilles, l'invention pourra être mise en oeuvre avec des inverseurs de conceptions différentes, notamment à portes.

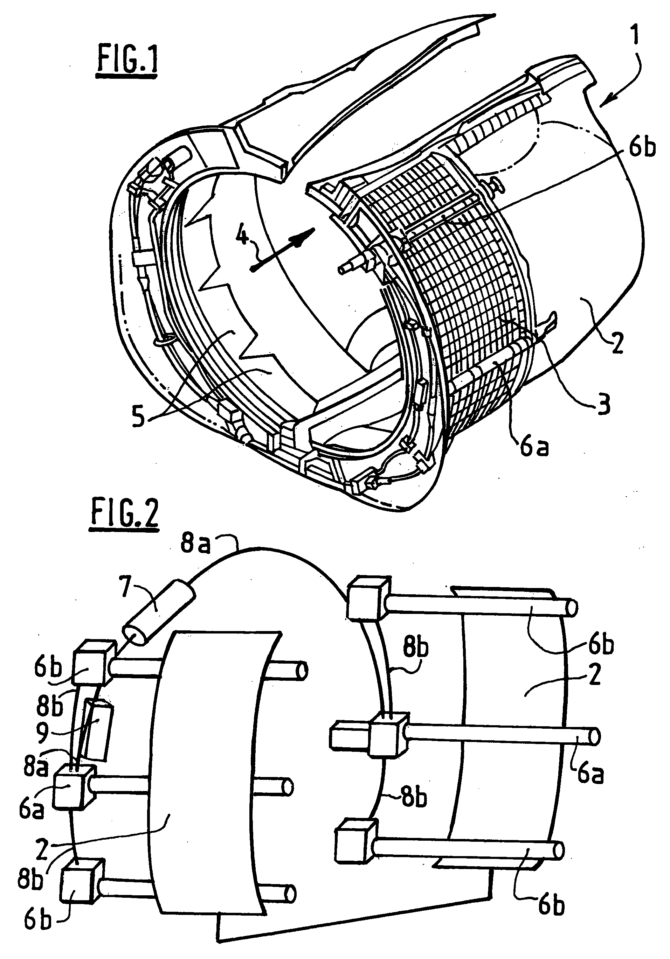

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté sous l'action de trois vérins 6a, 6b, comprenant un vérin central 6a et deux vérins additionnels 6b, actionnés par un unique moteur électrique 7 relié à des moyens de commande 9, comprenant un microcontrôleur. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

Selon une variante non représentée, seuls deux vérins haut et bas sont utilisés pour chaque capot, actionnés par un moteur électrique unique relié à une interface de commande. La puissance délivrée par le moteur électrique est distribuée aux deux vérins haut et bas par l'intermédiaire de deux arbres de transmission flexibles 8a.

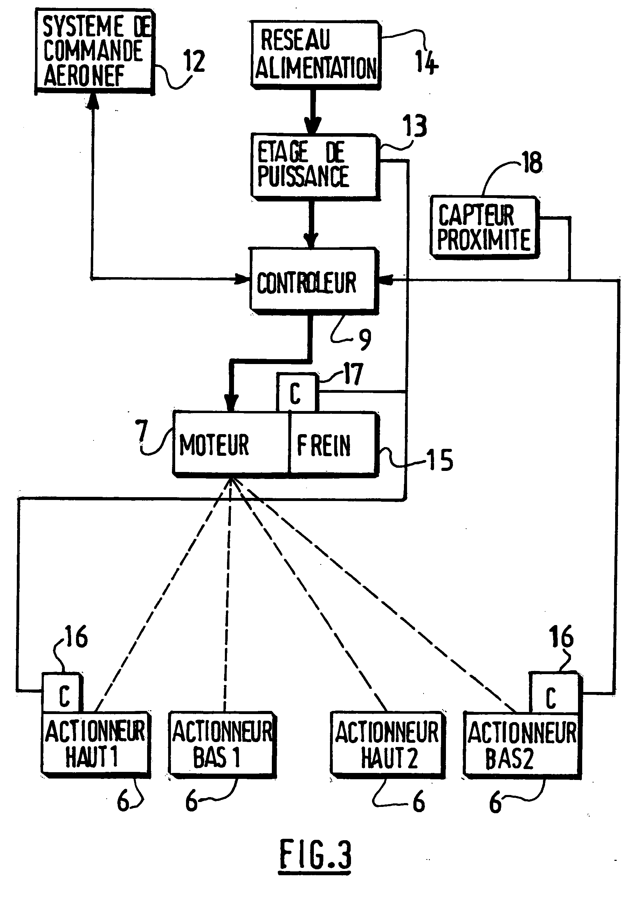

La figure 3 montre schématiquement un système de commande de l'actionnement de deux capots avec pour chaque capot deux actionneurs haut et bas.

Ainsi que représenté sur la figure 3 un système de commande des actionneurs d'un inverseur de poussée selon l'invention comprend des moyens de commande constitués par un microcontrôleur 9.

Ce microcontrôleur est relié par des moyens de communication 10 au système de commande 12 de l'aéronef.

Le système de commande comprend également un étage de puissance 13 relié au réseau d'alimentation 14 de l'aéronef.

Le microcontrôleur 9 permet la commande d'un moteur électrique 7 et des vérins ou actionneurs 6 comme décrit précédemment. Le moteur comporte également un frein 15 commandé également par le microcontrôleur 9.

Le système comprend également des capteurs de position absolue 16 permettant de connaître le déplacement du capot 2 entre la position ouverte et fermée. Ces capteurs de position 16 peuvent être placés sur le capot 2 ou sur l'actionneur 6.

Le moteur électrique 7 comprend un capteur de position relatif 17 fournissant des informations sur l'évolution du déplacement de la partie mobile du moteur.

Le système comprend également des capteurs de proximité 18 permettant d'identifier de façon indépendante des capteurs de position absolus 16 si le capot est en position ouverte ou fermée.

Ces capteurs sont reliés directement au contrôleur 9 dans le mode de réalisation représenté. Selon une variante, ces capteurs sont reliés au système de commande de l'aéronef qui transmet le signal de ce capteur au contrôleur 9.

Les moyens de commande 9 sont agencés pour asservir la commande du moteur 7 en fonction de la position du capot 2 dans sa course entre sa position d'ouverture et sa position de fermeture.

Pour réaliser cet asservissement, les moyens de commande 9 sont agencés pour déterminer la position instantanée Pi du capot 2 en fonction d'une donnée absolue de position de référence Pref et d'une intégration ou une sommation des données de position relative $\delta$Prel fournies par le capteur de position relative du moteur à partir de cette position de référence Pref jusqu'à la position instantanée, ce qui peut être décrit par la formule ci-dessous.

$$P_i = P_{ref} + \int \delta P_{rel}$$

La position de référence doit être déterminée lorsque les capteurs de position absolue 16 sont disponibles, mais également dans des cas ou ceux-ci ne sont pas disponibles.

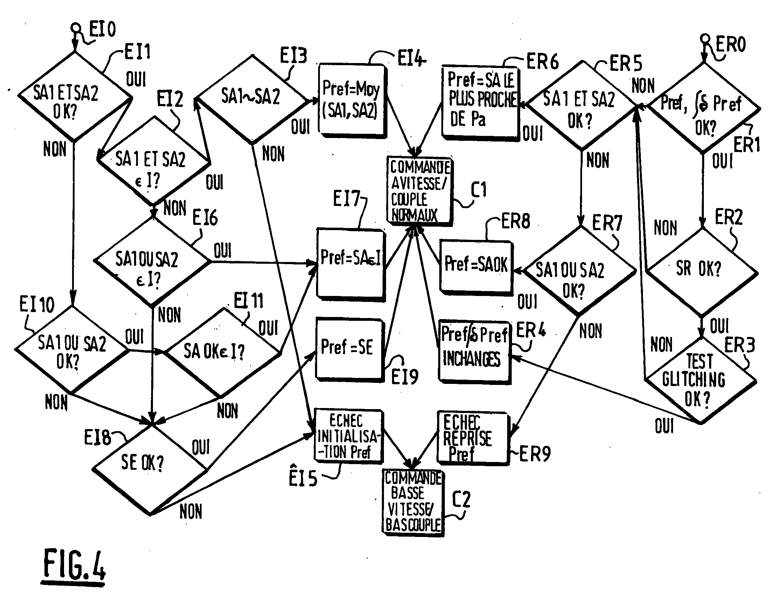

La figure 4 illustre le procédé permettant de déterminer la position de référence Pref. Cette position doit être déterminée lorsqu'une opération d'actionnement des capots de l'inverseur est initiée par un utilisateur. Cette position de référence Pref doit également être retrouvée lors d'une interruption d'une opération d'actionnement suivie d'une reprise de cette opération. Ce type d'interruption et de reprise peut intervenir par exemple en cas de coupure temporaire d'alimentation électrique.

Dans ces deux situations distinctes, le procédé suit un ensemble d'étapes pour déterminer une position de référence Pref utilisable.

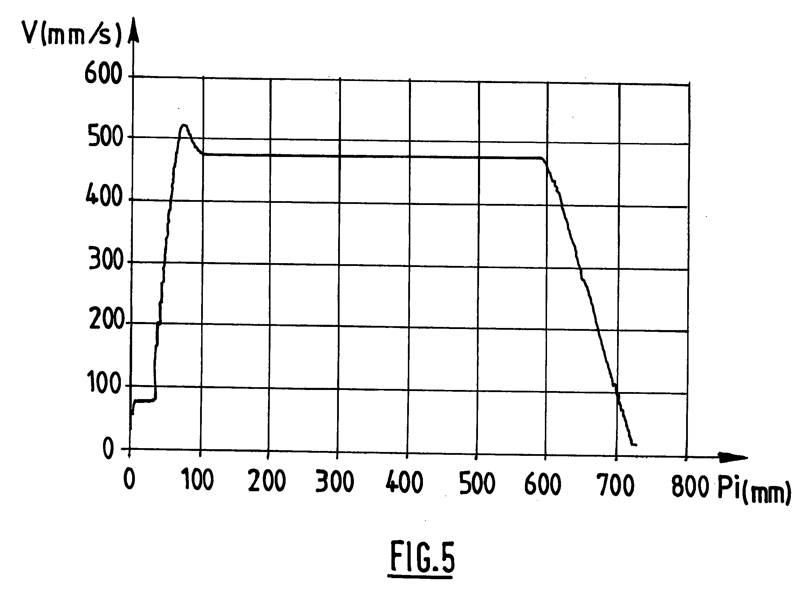

Dans le cas où une position de référence Pref peut être déterminée, une commande à vitesse normale est effectuée, en utilisant par exemple la courbe d'asservissement de vitesse V en fonction de la position instantanée Pi dans la course illustrée sur la figure 5. Il est à noter que le couple du moteur est également asservi en fonction de la position.

Dans le cas où une position de référence Pref ne peut pas être déterminée, le système ne dispose pas d'une information fiable sur la position du capot et une commande d'actionnement C2 à basse vitesse et/ou à bas couple est appliquée. Cette disposition rend l'ouverture et la fermeture de l'inverseur plus lente, mais permettent son utilisation malgré l'absence d'information de position.

L'actionnement à basse vitesse évite d'endommager la structure en absence d'information de position. La fin de la course du capot peut être détectée par une hausse du couple moteur et/ou une hausse du courant moteur, ou encore par la réception d'un signal provenant d'un capteur de proximité.

Ainsi que représenté sur la figure 4, l'initialisation de la position instantanée Pi par une position de référence Pref est réalisée à partie d'un point de départ EI0 lors d'une opération de déploiement ou d'ouverture à réception d'une instruction d'un utilisateur.

Dans une première étape EI1, la conformité des signaux reçus SA1 et SA2 des capteurs de position absolue 16 est vérifiée. On entend ici par signal conforme un signal disponible qui correspond à une information de position exploitable.

Si les signaux provenant de ces deux capteurs 16 sont conformes, une seconde étape EI2 est effectuée.

La seconde étape EI2 consiste à vérifier si les deux signaux SA1 et SA2 des capteurs 16 sont compris dans un intervalle de valeurs I correspondant à la course du capot 2, cet ensemble de valeur pouvant être augmenté d'une tolérance. Par exemple, sur une course de l'ordre de 730 mm, une tolérance de 10 mm peut être prévue, ce qui conduit à un intervalle de valeurs entre -10 et +740 mm.

Dans le cas ou les deux signaux SA1 et SA2 sont compris dans l'intervalle I, une troisième étape EI3 est réalisée.

La troisième étape EI3 consiste à vérifier si les signaux SA1 et SA2 provenant des capteurs sont en accord, c'est-à-dire si leurs valeurs sont proches l'une de l'autre, par comparaison à un seuil de différence acceptable prédéterminé.

Dans le cas ou les deux signaux SA1 et SA2 sont proches, une quatrième étape EI4 est réalisée.

La quatrième étape EI4 consiste en une initialisation de la position instantanée Pi du moteur à une valeur de référence Pref correspondant à la moyenne des valeurs des signaux SA1 et SA2 des capteurs de position absolus 16.

Une fois cette quatrième étape EI4 réalisée, la commande C1 à vitesse normale de l'actionnement du capot est réalisée, en calculant la position instantanée Pi du capot en fonction d'une donnée absolue de position de référence Pref et d'une intégration des données de position relative Prel fournies par le capteur de position relatif 17 du moteur à partir de cette position de référence Pref.

Ce premier enchaînement d'étapes entre EI0 et C1 correspond à un cas d'utilisation nominal dans lequel les valeurs SA1 et SA2 des deux capteurs de position absolus 16 sont disponibles et utilisables.

Dans le cas ou le test de l'accord des valeurs de l'étape 3 indique que les valeurs ne sont pas proches, une cinquième étape E5 est réalisée.

La cinquième étape E5 correspond à une détermination d'un échec de l'initialisation de la position initiale Pi.

Dans ces conditions, une commande à basse vitesse C2 est requise.

Dans le cas ou le test de la seconde étape EI2 indique que les deux valeurs de signal SA1 et SA2 des capteurs absolus 16 ne sont pas dans l'intervalle I, une sixième étape EI6 est réalisée.

La sixième étape EI6 consiste à vérifier si au moins l'un des signaux SA1 et SA2 provenant d'un capteur absolu 16 est compris dans l'intervalle I.

Dans le cas ou l'un des signaux de capteur absolu 16 est effectivement dans l'intervalle I, une septième étape EI7 est réalisée.

La septième étape EI7 consiste en une initialisation de la position instantanée Pi du moteur à une valeur de référence Pref correspondant à la valeur de signal SA du capteur de position absolu 16 se situant dans l'intervalle I.

Une fois cette septième étape EI7 réalisée, la commande C1 à vitesse normale de l'actionnement du capot est réalisée en utilisant la valeur de référence Pref ainsi déterminée.

Dans le cas ou le test de la sixième étape EI6 indique qu'aucune des valeurs de signal SA1 et SA2 des capteurs absolus 16 ne se situe dans l'intervalle I, une huitième étape EI8 est réalisée.

La huitième étape EI8 consiste en une vérification de l'existence d'un signal SE, provenant par exemple d'un capteur de proximité 19, indiquant que les capots 2 sont à l'une des extrémité de leur course, par exemple en butée en position ouverte ou fermée.

Si une telle information de position de butée Pb est disponible, une neuvième étape E9 est réalisée.

La neuvième étape EI9 consiste en une initialisation de la position instantanée Pi du moteur à une valeur de référence Pref correspondant à la position d'extrémité détectée SE.

Une fois cette neuvième étape EI9 réalisée, la commande C1 à vitesse normale de l'actionnement du capot 2 est réalisée en utilisant la valeur de référence Pref ainsi déterminée.

Dans le cas ou le test de la première étape EI1 indique que les signaux SA1 et SA2 des deux capteurs absolus 16 ne sont pas conformes, une dixième étape EI10 est réalisée.

La dixième étape EI10 consiste à vérifier si au moins un signal SA1 et SA2 d'un capteur de position absolue 16 est conforme.

Dans le cas ou le test de la seconde étape EI10 indique que le signal SA d'un capteur absolu 16 est conforme, une onzième étape EI11 est réalisée.

La onzième étape EI11 consiste à vérifier si la valeur SA du signal provenant d'un capteur absolu 16 est comprise dans l'intervalle I.

Dans le cas ou le signal SA du capteur absolu 16 est effectivement dans l'intervalle I, la septième étape EI7 est réalisée tel que décrite précédemment puis la commande C1 à vitesse normale de l'actionnement du capot 2 en utilisant la valeur de référence Pref ainsi déterminée.

Dans le cas ou le test de l'étape EI11 indique que le signal SA du capteur de position absolu 16 n'est pas dans l'intervalle I, l'étape EI8 est exécutée comme décrit précédemment, ainsi que les étapes suivantes.

Dans le cas ou le test de l'étape EI10 indique que le signal du capteur de position absolu 16 n'est pas conforme, l'étape EI8 est exécutée comme décrit précédemment, ainsi que les étapes suivantes.

Les étapes décrites ci-dessus du procédé correspondent à une initialisation et à une commande de l'actionnement à partir de la réception d'une instruction de commande d'actionnement.

Dans le cas ou une interruption de l'opération d'actionnement en cours de déploiement, la reprise de l'actionnement est réalisée en suivant des étapes décrites ci-dessous à partir du point de départ ER0.

La première étape ER1 consiste à vérifier si les valeurs des variables constituées par la position initiale Pref d'une part et l'intégration des données de position relative du capteur $\int \delta P_{rel}$ d'autre part sont toujours valables par rapport à l'état du système. Il est par exemple possible de considérer qu'après une certaine durée d'interruption, ces valeurs ne sont plus valables.

Dans le cas où la valeur des variables ci-dessus est considérée comme valable, un recalcul d'une nouvelle valeur de Pref n'est a priori pas nécessaire.

De façon avantageuse toutefois, deux étapes complémentaires de test ER2 et ER3 sont effectuées.

La seconde étape ER2 consiste à identifier si la valeur du signal de position relative SR fournie par le capteur moteur de position du moteur qui fournit les données de position relative $\delta$Prel est compatible avec les valeurs des variables Pref et $\int \delta P_{rel}$ que possède le contrôleur 9.

La troisième étape ER3 consiste à vérifier que le signal SR ne comporte pas de valeurs aberrantes provenant du capteur de position absolue, correspondant au phénomène de pics de signal également appelé glitching.

Si les tests des deux étapes ER2 et ER3 sont positifs, une quatrième étape ER4 est réalisée.

La quatrième étape ER4 consiste à reprendre l'actionnement en utilisant des valeurs de Pref et de $\int \delta P_{rel}$ préexistant avant l'interruption.

Cela correspond à une situation dans laquelle le capot n'a pas été déplacé par rapport à sa position d'arrêt Pa avant l'interruption.

La commande C1 à vitesse normale de l'actionnement du capot 2 est réalisée en utilisant les valeurs de Pref et de $\int \delta P_{rel}$ ainsi déterminées.

Selon une variante, il serait possible dans cette situation de reprendre la valeur Pa comme nouvelle valeur de référence et de recommencer à intégrer les valeurs de position relative.

Dans le cas ou les tests des trois premières étapes ER1, ER2 ou ER3 est négatif, une série d'étape est réalisée à partir d'une cinquième étape ER5 en vue de déterminer une nouvelle position de référence Pref à partir de laquelle une nouvelle intégration des valeurs de position relative sera réalisée.

La cinquième étape ER5 consiste à vérifier la conformité des signaux SA1 et SA2 reçus des capteurs de position absolue 16.

Si les signaux SA1 et SA2 provenant de ces deux capteurs 16 sont conformes, une sixième étape ER6 est effectuée.

La sixième étape ER6 consiste à utiliser la valeur SA de position fournie par le capteur absolu qui est la plus proche de la position Pa lors de l'interruption pour reprendre le mouvement d'actionnement puis la commande C1 à vitesse normale de l'actionnement du capot 2 en utilisant la valeur de référence Pref ainsi déterminée.

Dans le cas ou le test de la cinquième étape ER5 indique que les signaux SA1 et SA2 des deux capteurs absolus 16 ne sont pas conformes, une septième étape ER7 est réalisée.

La septième étape ER7 consiste à vérifier si au moins un signal SA d'un capteur de position absolue 16 est conforme.

Dans le cas ou le test de la septième étape ER7 indique qu'un signal SA de capteur absolu 16 est conforme, une huitième étape ER8 est réalisée.

La huitième étape ER8 consiste à utiliser la valeur de position SA fournie par le capteur absolu conforme pour reprendre le mouvement d'actionnement puis la commande C1 à vitesse normale de l'actionnement du capot 2 en utilisant la valeur de référence ainsi déterminée.

Dans le cas ou le test de la septième étape ER7 indique qu'aucun signal SA1, SA2 de capteur absolu 16 est conforme, une neuvième étape ER9 est réalisée.

L'étape ER9 consiste en une détermination du fait qu'aucune information de position valide n'est disponible.

Dans ces conditions, une commande à basse vitesse C2 est requise.

Il est à noter que le procédé de commande décrit ci-dessus peut être programmé par des moyens logiciels sur le calculateur.

Comme il va de soi, l'invention ne se limite pas à la seule forme d'exécution du système, décrite ci-dessus à titre d'exemple, mais elle embrasse au contraire toutes les variantes.

**Revendications**

1. Procédé de commande d'au moins un actionneur (6) de capots (2) d'un inverseur de poussée pour turboréacteur, l'actionneur étant entraîné par un moteur électrique (7) comprenant un capteur de position relatif (18) fournissant des informations (SR, δPrel) sur l'évolution de son déplacement,
dans lequel la commande du moteur (7) est asservie (C1) en fonction de la position instantanée (Pi) du capot (2) dans au moins une portion de sa course entre sa position d'ouverture et sa position de fermeture, la position instantanée (Pi) du capot étant déterminée en fonction d'au moins une donnée absolue de position de référence (Pref) et des données de position relatives (δPrel) par rapport à cette position de référence fournies par le capteur de position relative (18) du moteur, et
dans lequel, en cas de reprise de l'actionnement après une interruption, une détermination d'une nouvelle position de référence (Pref) est engagée avant la reprise de l'actionnement.

2. Procédé selon la revendication 1, dans lequel la position de référence (Pref) est déterminée (EI8, EI9) comme une position extrême de la course du capot (SE).

3. Procédé selon l'une des revendications précédentes, dans lequel la position de référence (Pref) ou la nouvelle position de référence est déterminée (EI4, EI7, ER6) en fonction d'au moins une donnée de position absolue (SA1, SA2) du capot fournie par un capteur de position absolue (16) du capot (2).

4. Procédé selon l'une des revendications précédentes, dans lequel la position de référence (Pref) est calculée (EI4) comme une moyenne d'au moins deux valeurs de position absolue (SA1, SA2) fournies par des capteurs de position absolue (16) du capot (2).

5. Procédé selon l'une des revendications précédentes, dans lequel les valeurs de position (SA1, SA2) fournies par au moins un capteur de position absolue (16) des capots (2) sont comparées (EI2, EI6, EI11) à un intervalle (I) de valeurs correspondant à la course du capot (2).

6. Procédé selon l'une des revendications précédentes, dans lequel, en cas d'échec de la détermination (EI5, ER9) d'une valeur de position de référence ou d'une nouvelle position de référence (Pref), la commande du moteur (7) est modifiée pour abaisser le couple et/ou la vitesse du moteur (C2).

7. Procédé selon l'une des revendications précédentes, dans lequel la position d'arrêt est utilisée (ER6, ER4) pour déterminer la nouvelle position de référence (Pref) lors de la reprise.

8. Procédé selon l'une des revendications précédentes, dans lequel un signal de position relative du moteur (SR) et la position d'arrêt (Pa) sont utilisés (ER4) pour déterminer la nouvelle position de référence.

**Patentansprüche**

1. Verfahren zum Steuern mindestens eines Aktuators (6) von Hauben (2) einer Schubumkehrvorrichtung für Turboreaktor, wobei der Aktuator von einem Elektromotor (7) angetrieben wird, der einen Sensor (18) relativer Position umfasst, der Informationen (SR, δPrel) über die Entwicklung seiner Bewegung liefert, wobei die Steuerung des Motors (7) in Abhängigkeit von der Momentanposition (Pi) der Haube (2) in mindestens einem Abschnitt ihres Wegs zwischen ihrer Öffnungsposition und ihrer Schließposition gesteuert wird (C1), wobei die Momentanposition (Pi) der Haube in Abhängigkeit von mindestens einer Absolutinformation der Referenzposition (Pref) und relativen Positionsdaten (δPrel) in Bezug zu dieser Referenzposition, die von dem Positionssensor (18) der relativen Position des Motors geliefert werden, bestimmt wird, und
wobei bei einer Wiederaufnahme der Betätigung nach einer Unterbrechung eine Bestimmung einer neuen Referenzposition (Pref) vor der Wiederaufnahme der Betätigung eingeleitet wird.

2. Verfahren nach Anspruch 1, wobei die Referenzposition (Pref) als eine Endposition des Wegs der Haube (SE) bestimmt wird (EI8, EI9).

3. Verfahren nach einem der vorhergehenden Ansprüche, wobei die Referenzposition (Pref) oder die neue Referenzposition in Abhängigkeit von mindestens einer Absolutpositionsinformation (SA1, SA2) der Haube, die von einem Absolutpositionssensor (16) der Haube (2) geliefert wird, bestimmt wird (EI4, EI7, ER6).

4. Verfahren nach einem der vorhergehenden Ansprüche, wobei die Bezugsposition (Pref) als ein Durchschnitt von mindestens zwei Absolutpositionswerten (SA1, SA2), die von Absolutpositionssensoren (16) der Haube (2) geliefert werden, berechnet wird (EI4).

5. Verfahren nach einem der vorhergehenden Ansprüche, wobei die Positionswerte (SA1, SA2), die von mindestens einem Absolutpositionssensor (16) der Haube (2) geliefert werden, mit einem Intervall (I) von Werten, die dem Weg der Haube (2) entsprechen, verglichen werden (EI2, EI6, EI11).

6. Verfahren nach einem der vorhergehenden Ansprüche, wobei im Fall des Versagens der Bestimmung (EI5, ER9) eines Referenzpositionswerts oder einer neuen Referenzposition (Pref) die Steuerung des Motors (7) geändert wird, um das Drehmoment und/oder die Drehzahl des Motors zu ändern (C2).

7. Verfahren nach einem der vorhergehenden Ansprüche, wobei die Stoppposition verwendet wird (ER6, ER4), um die neue Referenzposition (Pref) bei der Wiederaufnahme zu bestimmen.

8. Verfahren nach einem der vorhergehenden Ansprüche, wobei ein relatives Positionssignal des Motors (SR) und der Stoppposition (Pa) verwendet werden (ER4), um die neue Referenzposition zu bestimmen.

**Claims**

1. A method for controlling at least one actuator (6) of cowls (2) of a thrust reverser for a turbojet engine, the actuator being driven by an electric motor (7) comprising a relative position sensor (18) providing information (SR, δPrel) on the evolution of its displacement,
wherein the control of the motor (7) is servo-controlled (C1) according to the instantaneous position (Pi) of the cowl (2) in at least one portion of its stroke between its open position and its closed position, the instantaneous position (Pi) of the cowl being determined depending on at least one reference position absolute data (Pref) and on the relative position data (δPrel) relative to this reference position provided by the relative position sensor (18) of the motor, and
wherein, in case of resumption of the actuation after an interruption, a determination of a new reference position (Pref) is engaged before the resumption of the actuation.

2. The method according to claim 1, wherein the reference position (Pref) is determined (EI8, EI9) as an extreme position of the stroke of the cowl (SE).

3. The method according to any of the preceding claims, wherein the reference position (Pref) or the new reference position is determined (EI4, EI7, ER6) depending on at least one absolute position data (SA1, SA2) of the cowl provided by an absolute position sensor (16) of the cowl (2).

4. The method according to any of the preceding claims, wherein the reference position (Pref) is calculated (EI4) as an average of at least two absolute position values (SA1, SA2) provided by absolute position sensors (16) of the cowl (2).

5. The method according to any of the preceding claims, wherein the position values (SA1, SA2) provided by at least one absolute position sensor (16) of the cowls (2), are compared (EI2, EI6, EI11) with an interval (I) of values corresponding to the stroke of the cowl (2).

6. The method according to any of the preceding claims, wherein, in case of failure of the determination (EI5, ER9) of a reference position value or a new reference position (Pref), the control of the motor (7) is changed in order to lower the torque and/or the speed of the motor (C2).

7. The method according to any of the preceding claims, wherein the stop position is used (ER6, ER4) for determining the new reference position (Pref) during the resumption.

8. The method according to any of the preceding claims, wherein a relative position signal of the motor (SR) and the stop position (Pa) are used (ER4) in order to determine the new reference position.

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0843089 A
- WO 2006134253 A

- WO 03010430 A